# EUROPÄISCHE PATENTSCHRIFT

(11) **EP 2 509 078 B1**
(45) Veröffentlichungstag und Bekanntmachung des Hinweises auf die Patenterteilung: **11.06.2014**
(21) Anmeldenummer: 12002091.2
(22) Anmeldetag: 24.03.2012
(51) Int. Cl.: G21C 17/08

(54) **Prüfsystem für Brennelemente-Zentrierstifte an einem Kerngerüst**
Test system for reactor element locating pins on a core structure
Système de contrôle pour pointes de centrage d'éléments de combustion sur une structure centrale

(30) Priorität: 07.04.2011 DE 102011016283
(43) Veröffentlichungstag der Anmeldung: 10.10.2012
(73) Patentinhaber: Westinghouse Electric Germany GmbH, 68167 Mannheim (DE)
(72) Erfinder: Obierai, Wolfgang, 64683 Einhausen (DE); Riesner, Laurens, 68623 Lampertheim (DE); Zuckermann, Stefan, 68519 Viernheim (DE)
(74) Vertreter: Fritsch, Klaus

(56) Entgegenhaltungen:
- WO-A1-91/18260
- US-A- 4 499 046

## Beschreibung

Die Erfindung betrifft ein Prüfsystem für Brennelemente-Zentrierstifte an einem oberen Kerngerüst, umfassend ein oberes Kerngerüst mit einer Vielzahl von gleichartigen, parallelen, senkrecht zu einer Gitterrasterebene in einem jeweiligen Rastermaß angeordneten Brennelemente-Zentrierstiften und ein Wasserbecken, in dem das obere Kerngerüst derart anordenbar ist, dass die Brennelemente-Zentrierstifte in einem Abstand zum Beckenboden in etwa senkrecht nach unten ausgerichtet sind.

Es ist allgemein bekannt, dass in nuklearen Reaktoranlagen stabähnliche Brennelemente als nuklearer Brennstoff zum Einsatz kommen. Die eigentliche Kernreaktion findet in einem Reaktorgefäß statt, welches in einem gefüllten Wasserbecken unterhalb dessen Wasseroberfläche angeordnet ist und beispielsweise in einem schachbrettähnlichen Rastermaß von beispielsweise 16 mal 16 eine entsprechende Anzahl von Brennelementen aufnimmt. Die Brennelemente weisen zumeist einen quadratischen Grundriss auf. Im Falle einer Anlagenrevision wird das unter Wasser befindliche Reaktorgefäß geöffnet und zusammen mit den Brennelementen bedarfsweise einer Untersuchung unterzogen. Hierbei ist auch ein turnusmäßiger Austausch von Brennelementen vorgesehen.

Das Rastermaß der im Reaktorgefäß angeordneten Brennelemente ist durch ein oberes und ein unteres Kerngerüst vorgegeben. Diese zeichnen sich durch eine plattenähnliche ebene Grundstruktur aus, wobei hierzu zumindest im Falle des oberen Kerngerüstes senkrecht in einem durch Spalten und Zeilen bestimmten Rastermaß Brennelemente-Zentrierstifte vorgesehen sind. Diese weisen üblicherweise eine längliche Zylinderform mit daran anschließendem Kegel oder Kegelstumpf auf sowie gegebenenfalls eine axiale Zentralbohrung, wobei diese beim unteren Kerngerüst nach oben und beim oberen Kerngerüst nach unten ausgerichtet sind. Ein stabähnliches Brennelement weist an seinen beiden Enden jeweils zwei darauf angepasste zylindrische Vertiefungen auf. Diese sind bei einer näherungsweise quadratischen Grundfläche eines Brennelementes in zwei schräg gegenüberliegenden Eckbereichen angeordnet, wobei deren Abstand zueinander einen Rastermaßversatz festlegt.

Auf diese Weise lassen sich Brennelemente zwischen oberem und unterem Kerngerüst anordnen, wobei diese an ihren beiden Enden durch jeweils zwei Brennelemente-Zentrierstifte fixiert sind. Diese Fixierung ist notwendig, um einen sicheren Betrieb des Reaktors zu gewährleisten. Bei einer Entnahme oder Zuführung eines Brennelementes im Falle einer Wartung oder Revision ist das obere Kerngerüst anzuheben, beispielsweise mit einem Kran, so dass freier Zugriff auf jeden Stellplatz im Reaktorgefäß gewährleistet ist. Hierbei wird das obere Kerngerüst mittels eines Kranes in ein angrenzendes Abstellbecken verbracht, wobei das obere Kerngerüst aus Sicherheitsgründen stets unterhalb der gemeinsamen Wasseroberfläche beider Becken verbleibt. Nach erfolgter Entnahme beziehungsweise Zuführung von Brennelementen ist das obere Kerngerüst wieder auf den Reaktorkern zu verbringen, so dass die Brennelemente sicher fixiert sind.

Durch das notwendige toleranzbehaftete Anheben und Absenken des oberen Kerngerüstes kann es zu Abnutzungserscheinungen der Brennelemente-Zentrierstifte kommen, insbesondere an der Übergangsstelle der Stifte zum restlichen Kerngerüst aber auch an den kegelförmigen Spitzen. Eine weitere Abnutzung der Brennelemente-Zentrierstifte kann aber beispielsweise auch durch unvermeidliche Vibrationen des im Betrieb befindlichen Reaktorkernes resultieren.

Aufgrund der in Kernanlagen herrschenden höchstmöglichen Sicherheitsanforderungen sind daher die Brennelemente-Zentrierstifte des oberen Kerngerüstes in regelmäßigen Abständen einer Überprüfung zu unterziehen. Hierzu ist das obere Kerngerüst in eine Position innerhalb des Abstellbeckens zu verbringen, in welcher eine Zugänglichkeit der nach unten ragenden Brennelemente-Zentrierstifte gewährleistet ist, wobei eine Drehung des Kerngerüstes, so dass die Brennelemente-Zentrierstifte nach oben zeigen, nicht praktikabel ist. Nachfolgend sind die jeweiligen Brennelemente-Zentrierstifte mittels einer Analysevorrichtung einer Prüfung zu unterziehen, wobei die Analysevorrichtung mittels eines Manipulators sequentiell zu einer jeweiligen Prüfposition unterhalb eines jeweiligen Brennelemente-Zentrierstiftes zu verfahren und in Richtung der Stifte anzuheben beziehungsweise abzusenken ist. Dies geschieht seither mit einem X-Y-Z-Bewegungsmanipulator, welcher längs der Seiten des Abstellbeckens angeordnet ist und einen hohen Platzbedarf aufweist. Zusammen mit einer zusätzlichen Drehbarkeit der Analysevorrichtung ergeben sich somit wenigstens vier notwendige Bewegungsfreiheitsgrade, welche zur Bewegung der Analysevorrichtung vorzuhalten sind. Zur Verringerung des Platzbedarfes gibt es auch die Möglichkeit, die Brennelemente-Zentrierstifte separat mit einem U-Boot-ähnlichen Manipulator anzufahren. Dies erweist sich aufgrund der Anzahl der Bewegungsfreiheitsgrade, nämlich vorzugsweise sechs, als sehr aufwändig und kompliziert, weil das manuelle Anfahren jedes einzelnen Brennelemente-Zentrierstiftes mit einem erheblichen Steuer- und Bedienungsaufwand verbunden ist.

US 4499046 zeigt ein weiteres Prüfsystem.

Ausgehend von diesem Stand der Technik ist es Aufgabe der Erfindung, ein verbessertes Prüfsystem für Brennelemente-Zentrierstifte anzugeben, welches platzsparend ist und einen reduzierten Bedienungsaufwand ermöglicht.

Diese Aufgabe wird gelöst durch ein Prüfsystem gemäß Anspruch 1. Dieses umfasst:
- einen unter Wasser einen Auftrieb erfahrenden Tauchkörper mit wenigstens einer Antriebsvorrichtung,
- wenigstens zwei parallele mit dem Tauchkörper verbundene Führungsschienen, deren jeweiliges Querschnittsprofil auf die Form der der Gitterrasterebene abgewandten Enden der Brennelemente-Zentrierstifte angepasst ist, wobei bei einem Eingriff der Enden in die jeweiligen Führungsschienen eine gleitende Führung des Tauchkörpers längs paralleler Reihen von Brennelemente-Zentrierstiften ermöglicht ist,
- wenigstens eine Analysevorrichtung, welche mit dem Tauchkörper in eine jeweilige Position unterhalb eines der Brennelemente-Zentrierstifte verbringbar ist, so dass dessen Überprüfung durch die Analysevorrichtung ermöglicht ist.

Die Grundidee der Erfindung besteht darin, einen platzsparenden, U-Boot-ähnlichen Tauchkörper als Bewegungsmanipulator für die Analysevorrichtung zu verwenden, wobei dessen Bewegungsfreiheitsgrade beim sequentiellen Anfahren der zu überprüfenden Brennelemente-Zentrierstifte derart zu reduzieren sind, dass dessen Steuerung beziehungsweise Handhabung vereinfacht ist.

Dies wird dadurch erreicht, dass parallele Reihen von Brennelemente-Zentrierstiften selbst als Führung für den Tauchkörper verwendet werden. Hierzu ist der Tauchkörper in seinem oberen Bereich mit zwei parallelen und den Brennelemente-Zentrierstiften zugewandten Führungsschienen zu versehen, welche mit den oberhalb des Tauchkörpers befindlichen und zu prüfenden Brennelemente-Zentrierstiftenden selbst eine Gleitverbindung eingehen. Die Dichte des Tauchkörpers ist vorzugsweise derart zu wählen, dass dieser unter Wasser einen permanenten Auftrieb erfährt. So wird er ohne weitere Maßnahmen mit seinen Schienen gegen die nach unten ragenden Brennelemente-Zentrierstifte gedrückt, so dass eine sichere Führung gewährleistet ist. Durch den Einsatz zweier paralleler Führungsschienen ist ein seitliches Abdriften aus der Führung ausgeschlossen. Letztendlich ist eine stabile Führung gewährleistet, wenn wenigstens insgesamt drei in einem Dreieck angeordnete Brennelemente-Zentrierstiftenden im Eingriff mit den beiden Führungsschienen sind. Deren Zahl ist auf zwei reduzierbar, wenn noch eine weitere gleitende Abstützung nach oben außerhalb der Führungsschienen vorgesehen ist, so dass letztendlich wieder ein Dreieck gebildet ist. Die Zahl der Bewegungsfreiheitsgrade des Tauchkörpers längs einer erfindungsgemäßen Führung ist damit in vorteilhafter Weise auf genau einen reduziert, also einer Vor-und Rückbewegung längs paralleler Brennelemente-Zentrierstiftreihen. Es bietet sich an, jeweils zwei Reihen von Brennelemente-Zentrierstiften als Führung zu verwenden, welche jeweils dafür vorgesehen sind, die jeweils gleichen Brennelemente zu fixieren. Um eine Bewegung des Tauchkörpers längs der Führung zu ermöglichen, verfügt dieser über einen steuerbaren Antrieb, welcher einen entsprechenden Vortrieb erzeugen kann.

Im weiteren Prüfablauf ist der Tauchkörper nach Überprüfung einer kompletten Doppelreihe an Brennelemente-Zentrierstiften der jeweiligen Führung zu entnehmen und der Führung durch eine weitere zu überprüfende Doppelreihe zuzuführen. Dies kann beispielsweise mittels einer am Boden des Wasserbeckens angeordneten Querversatzvorrichtung geschehen. Es sind aber auch weitere quer verlaufende und relativ zum Tauchkörper einstellbare Führungsmittel denkbar, mit welchen der Tauchkörper eigenständig einen Reihenwechsel vollziehen kann. Selbstverständlich kann der Tauchkörper auch dafür vorgesehen sein, sich in mehreren Freiheitsgraden eigenständig zu bewegen, beispielsweise durch eine oder mehrere schwenkbare Antriebsvorrichtungen, und so eigenständig einen Reihenwechsel zu vollziehen. Zwei feste und parallele Antriebsvorrichtungen, welche bedarfsweise gegenläufig betreibbar sind, erzeugen in diesem Fall eine Drehbewegung des Tauchkörpers.

Der Tauchkörper selbst hat wenigstens eine Analysevorrichtung an Bord, welche vor dem Prüfvorgang durch den Tauchkörper derart im Nahbereich eines zu prüfenden Brennelemente-Zentrierstiftes zu platzieren ist, so dass eine Prüfung ermöglicht ist. Auf diese Weise ist ein Platz sparendes Prüfsystem bereitgestellt, welches eine vereinfachte Prüfung von Brennelemente-Zentrierstiften an einem oberen Kerngerüst ermöglicht und insbesondere das manuelle Ansteuern von jedem einzelnen Brennelement-Zentrierstift vermeidet.

Entsprechend einer weiteren Ausgestaltungsform der Erfindung weist der Tauchkörper wenigstens eine erste überwiegend parallel zu den Führungsschienen ausgerichtete, eine zweite quer dazu in überwiegend horizontaler Richtung wirkende und eine dritte ebenfalls quer dazu in überwiegend vertikaler Richtung wirkende Antriebsvorrichtung auf. Auf diese Weise ist der Tauchkörper derart bewegbar, dass ein Reihenwechsel ermöglicht ist.

Entsprechend einer Ausgestaltungsform der Erfindung weist wenigstens eine Führungsschiene zwischen ihren beiden Enden einen unterbrochenen Bereich auf, wobei hinter diesem eine darauf gerichtete Analysevorrichtung angeordnet ist. Auf diese Weise lässt sich eine Analysevorrichtung auf einfache Weise in den Nahbereich direkt unter einen zu prüfenden Brennelemente-Zentrierstift verbringen, wodurch die Randbedingungen für eine Analyse entsprechend verbessert sind. Durch den unterbrochenen Bereich hindurch ist beispielsweise ein direkter optischer Kontakt zwischen Analysevorrichtung und zu prüfendem Brennelemente-Zentrierstift ermöglicht.

Wenn diese Option für beide Führungsschienen gewählt ist, so lassen sich in besonders vorteilhafter Weise mit den dann zwei Analysevorrichtungen von einer Prüfposition aus zwei Brennelemente-Zentrierstifte gleichzeitig überprüfen, was eine erhebliche Zeitersparnis bedeutet. In der jeweiligen Prüfposition steht der jeweils zu prüfende Brennelemente-Zentrierstift nicht für Führungszwecke zur Verfügung, so dass die Führungsschienen entsprechend zu verlängern sind. Hierzu ist darauf zu achten, dass die Führungsschienen unter Berücksichtigung des Rastermaßversatzes eines Stiftpaares wenigstens so lang sind, dass beide Führungsschienen insgesamt stets wenigstens vier Brennelemente-Zentrierstifte abdecken, davon wenigstens zwei zur Führung, und dass beide Führungsschienen einen jeweils entsprechend dem Rastermaßversatz versetzten unterbrochenen Bereich aufweisen. Es ist also für jede Position des Tauchkörpers längs der Führung sicherzustellen, dass wenigstens drei Abstützpunkte nach oben vorhanden sind, davon wenigstens zwei im Eingriff mit den Führungsschienen befindliche Brennelemente-Zentrierstifte.

Entsprechend einer Ausgestaltungsform der Erfindung sind zumindest Teile der Analysevorrichtung durch den unterbrochenen Bereich heraus bewegbar in Richtung des jeweils zu prüfenden Brennelemente-Zentrierstiftes. Vorzugsweise sind dies Messaufnehmer oder sonstige aktive und/oder passive Sensoren, beispielsweise auch auf dem Prinzip einer Wirbelstrommessung beruhend.. Dies ermöglicht aufgrund der dann geringeren Distanz eine präzisere Prüfung. Es ist durchaus denkbar, dass ein hohlzylindrischer Sensorkopf herausbewegt wird, welcher in herausgefahrener Position einen Teil eines Brennelemente-Zentrierstiftes umschließt. Häufig weisen Brennelement-Zentrierstifte eine zentrale in axialer Richtung verlaufende Bohrung auf. Selbstverständlich ist es im Rahmen der Erfindung auch vorgesehen, eine Messsonde in die zentrale Bohrung einzuführen.

Gemäß einer Erfindungsvariante ist der herausbewegbare Teil der Analysevorrichtung in seinem oberen Teil hohlzylindrisch, so dass ein Brennelemente-Zentrierstift umfasst werden kann und im oberen Bereich des oberen Teils ist eine radiale Aussparung vorgesehen. Wenn die Aussprung nämlich in Richtung der Führungsschienen ausgerichtet und nur teilweise ausgefahren ist, kann während einer Bewegung des Tauchkörpers längs der Führungsschiene die Spitze des nächstfolgenden Brennelemente-Zentrierstiftes durch die Aussparung in den inneren Hohlraum des bewegbaren Teils der Analysevorrichtung gelangen und durch Anschlag an dessen anderes radiales Ende einen Bewegungsstopp des Tauchkörpers bewirken. Danach ist der bewegbare Teil zu Analysezwecken weiter auszufahren. Der Positioniervorgang unter einem Brennelemente-Zentrierstift ist dadurch in vorteilhafter Weise vereinfacht.

Entsprechend einer bevorzugten Variante des Prüfsystems umfasst die wenigstens eine Analysevorrichtung Mittel für eine Ultraschallprüfung. Es sind aber durchaus auch optische Verfahren unter Verwendung eines entsprechenden Sensors oder einer Kamera sowie Wirbelstrommessverfahren denkbar.

Gemäß einer weiteren Anordnungsvariante weist der Tauchkörper wenigsten einen Orientierungssensor auf. Dieser ermöglicht nämlich ein gezieltes Anfahren einer jeweiligen Prüfposition beim sequentiellen Abfahren einer Doppelreihe von zu prüfenden Brennelemente-Zentrierstiften, sofern entsprechende Orientierungsmarken vorgesehen sind. Dies können sowohl die Brennelemente-Zentrierstifte selbst sein aber auch entsprechend einer weiteren Variante separate Orientierungsmarken am Kerngerüst, beispielsweise farbige Markierungen. Auf diese Weise ist eine jeweilige Relativposition des Tauchkörpers zum Kerngerüst ermittelbar. Ebenso ist es erfindungsgemäß vorgesehen, dass der Wasserbeckenboden und/oder die Wasserbeckenwandung Orientierungsmarken - beispielsweise Gitterrasterlinien - aufweisen, welche von dem Orientierungssensor erkennbar sind, so dass daraus eine jeweilige Position des Tauchkörpers zum Wasserbecken ermittelbar ist. Für den Fall, dass das obere Kerngerüst eine feste und eindeutige Abstellposition im Wasserbecken hat, ist daraus auch eine Relativposition des Tauchkörpers zum Kerngerüst und damit zu den Brennelemente-Zentrierstiften ermittelbar.

Als Antriebsvorrichtung wird erfindungsgemäß beispielsweise wenigstens ein Propellerantrieb verwendet. Dieser kann am vorderen und/oder hinteren Ende des Tauchkörpers angeordnet werden. Ein derartiger Antrieb wird beispielsweise auch in andere Größe bei U-Booten verwendet und ist besonders als Vorschubvorrichtung unter Wasser geeignet.

Um eine volle Bewegungsfreiheit des Tauchkörpers unterhalb eines im Wasserbecken in einer Prüfposition angeordneten oberen Kerngerüstes zu ermöglichen, ist es entsprechend einer Ausgestaltungsvariante vorgesehen, im Wasserbecken Abstandshalter anzuordnen. Ein derartiger Abstand beträgt beispielsweise 1 m. Zur Handhabung des oberen Kerngerüstes ist entsprechend einer weiteren Variante ein Kran oder eine Hebevorrichtung vorgesehen, wodurch dieses im Wasserbecken anordenbar ist.

Ein Verfahren zur Prüfung von Brennelemente-Zentrierstiften an einem oberen Kerngerüst mittels eines erfindungsgemäßen Prüfsystems ist demgemäß gekennzeichnet durch folgende Schritte, welche bereits zuvor erläutert wurden:
o Anordnung des oberen Kerngerüstes (10, 68, 92) im Wasserbecken,
o Positionierung des Tauchkörpers (32, 62, 82) unterhalb des oberen Kerngerüstes (10, 68, 92), so dass eine gleitende Führung des Tauchkörpers (32, 62, 82) längs paralleler Reihen (42, 44) von Brennelemente-Zentrierstiften (14, 16, 50, 52, 72, 94) ermöglicht ist,
o sequentielles Anfahren jeweiliger Prüfpositionen für längs der parallelen Reihen (42, 44) befindliche Brennelemente-Zentrierstifte (14, 16, 50, 52, 72, 94),
o Prüfen der Brennelemente-Zentrierstifte (14, 16, 50, 52, 72, 94) in der jeweiligen Prüfposition mittels der Analysevorrichtung (86, 96).

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: eine Draufsicht auf ein erstes exemplarisches oberes Kerngerüst,
- Fig. 2: eine Draufsicht auf ein zweites exemplarisches Kerngerüst mit Tauchkörper,
- Fig. 3: eine Seitenansicht auf ein drittes exemplarisches Kerngerüst mit Tauchkörper ,
- Fig. 4: eine Seitenansicht auf ein viertes exemplarisches Kerngerüst mit Tauchkörper,
- Fig. 5a-c: einen beispielhaften Andockvorgang an einen Brennelement-Zentrierstift sowie
- Fig. 6: eine Schnittansicht auf Analysevorrichtung und Brennelement-Zentrierstift.

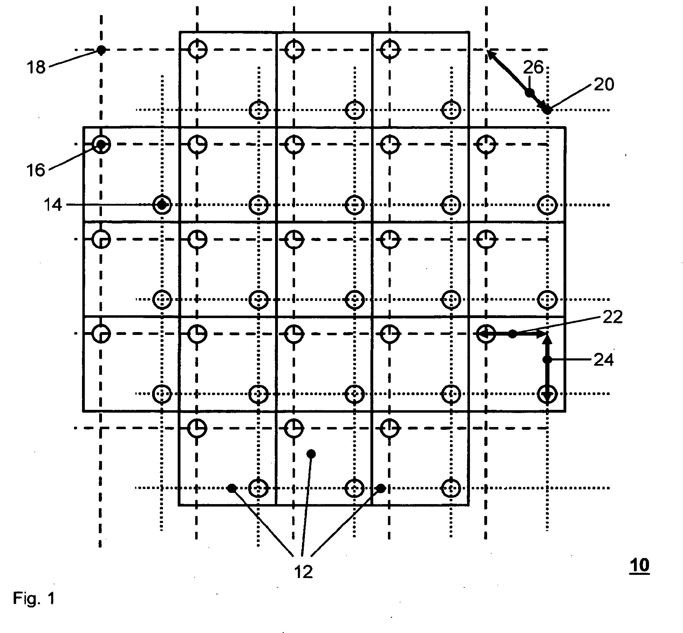

Fig. 1 zeigt eine Draufsicht 10 auf erstes exemplarisches oberes Kerngerüst. Dieses umfasst in der Fig. einundzwanzig vorgesehene Verbindungspositionen für Brennelemente in einem quadratischen Raster von jeweils fünf Spalten und fünf Zeilen, wobei in der Realität eine deutlich höhere Zahl an Verbindungspositionen vorgesehen ist, beispielsweise einhundert bis vierhundert. Jede Verbindungsposition ist durch eine quadratische Brennelementgrundfläche 12 mit jeweils zwei schräg gegenüber angeordneten Brennelement-Zentrierstiften 14, 16 gekennzeichnet, welche dafür vorgesehen sind, in entsprechende Haltelöcher eines Brennelementes einzugreifen und dieses so zu fixieren. Paare von Brennelemente-Zentrierstiften 14, 16 sind in jeweils gleichartigen Rastermassen 18, 20 angeordnet, welche aber um einen Rastermaßversatz 26, beziehungsweise dessen x-Komponente 22 und y-Komponente 24 gegeneinander versetzt sind. So sind längs der Zeilen beziehungsweise Spalten der beiden parallelen Rastermasse 18, 20 parallele Reihen von Brennelemente-Zentrierstiften 14, 16 gebildet.

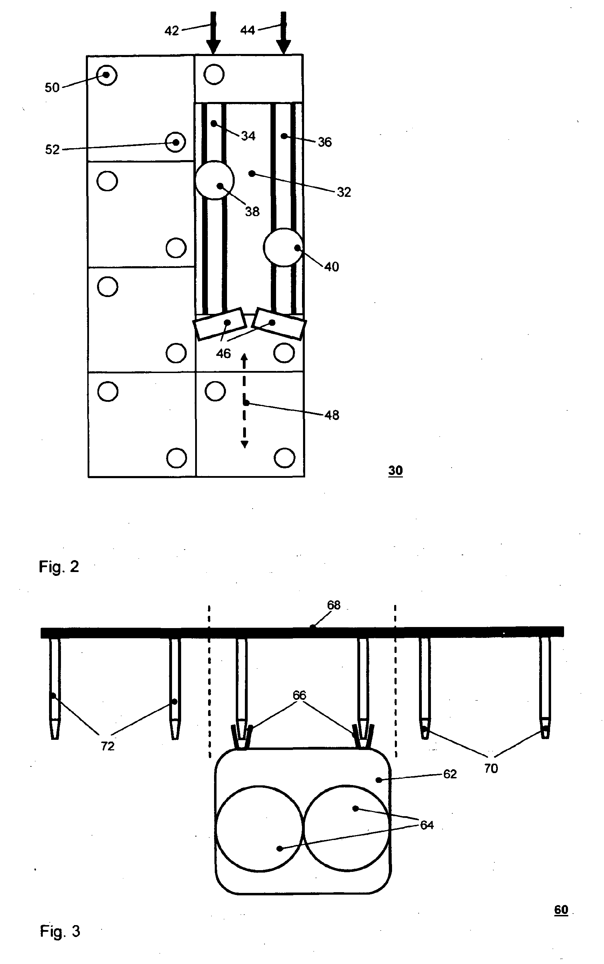

Fig. 2 zeigt eine von unten gesehene Draufsicht 30 auf ein zweites exemplarisches oberes Kerngerüst mit einem Tauchkörper 32, welche insoweit nicht ganz korrekt ist, als der Tauchkörper 32 eigentlich die an ihm befestigten Führungsschienen 34, 36 verdecken müsste, welche ihrerseits ebenfalls nicht in ihrer Eigenschaft als U-Profil sichtbar sein dürften. Diese zeichnerische Ungenauigkeit ist jedoch notwendig, um das Zusammenwirken der Komponenten besser zu veranschaulichen.

Das obere Kerngerüst ist in einem Ausschnitt von vier mal zwei vorgesehenen Verbindungspositionen für Brennelemente dargestellt, welche ihrerseits jeweils zwei schräg gegenüber liegende Brennelemente-Zentrierstifte 50, 52 aufweisen. Der unter Wasser befindliche Tauchkörper 32 wird auftriebsbedingt mit seinen auf die Enden der Brennelemente-Zentrierstifte 50, 52 gerichteten U-Profil-förmigen Führungsschienen 34, 36 von unten gegen das obere Kerngerüst gedrückt, so dass die Enden der jeweiligen Brennelemente-Zentrierstifte 50, 52 im Eingriff mit den U-Profil-förmigen Führungsschienen 34, 36 sind. Damit ist eine gleitende Führung des Tauchkörpers 32 längs paralleler Reihen 42, 44 von Brennelemente-Zentrierstiften 50, 52 ermöglicht, wie auch mit dem Pfeil 48 angedeutet. Die Führungsschienen 34, 36 weisen zwischen ihren beiden Enden einen unterbrochenen Bereich 38 beziehungsweise 40 auf, welche in einer jeweiligen Analyseposition des Tauchkörpers genau unter einem jeweils zu prüfenden Brennelemente-Zentrierstift 50, 52 befindlich sind. Somit ist es mit einer jeweils unterhalb des unterbrochenen Bereichs 38, 40 und nicht gezeigten Analysevorrichtung möglich, eine Überprüfung der jeweils zu prüfenden Brennelemente-Zentrierstifte 50, 52 durchzuführen. Bedarfsweise ist es auch mögliche, Sensorkomponenten der Analysevorrichtung aus dem Tauchkörper 32 heraus durch den unterbrochenen Bereich herauszufahren. Eine Antriebsvorrichtung 46, in diesem Fall zwei schwenkbare schiffsschraubenähnliche Propellervorrichtungen, sind an einem Ende des Tauchkörpers 32 vorgesehen, um diesen längs der Führung 48 vorbeziehungsweise zurückzubewegen.

Die beiden Propellervorrichtungen können aber durchaus auch fest angeordnet sein, wobei zudem eine gegenläufige Vorschubbewegung ermöglicht sein kann, so dass eine Drehbewegung des Tauchkörpers 32 initiierbar ist. Nicht gezeigt sind eine zusätzliche quer- und eine vertikal ausgerichtete Antriebsvorrichtung. Die somit insgesamt vier Antriebsvorrichtungen ermöglichen ein Manövrieren des Tauchkörpers in alle Richtungen, so dass hierdurch beispielsweise ein Reihenwechsel vollzogen werden kann. Der komplizierte Manövriervorgang ist jedoch auf eine jeweilige Reihe beschränkt und muss in vorteilhafter Weise nicht für jeden einzelnen Brennelement-Zentrierstift durchgeführt werden. An den unterbrochenen Bereichen 38, 40 ist ein Eingriff von Brennelemente-Zentrierstiften in die Führungsschienen 34, 36 nicht möglich. Deshalb sind diese so lang, dass unabhängig von der jeweiligen Position des Tauchkörpers längs der Führung stets wenigstens drei Brennelemente-Zentrierstifte 50, 52 im aktiven Eingriff sind, so dass eine sichere Abstützung des Tauchkörpers 32 durch das über ihm befindliche obere Kerngerüst gewährleistet ist.

Fig. 3 zeigt eine Rückseitenansicht 60 auf ein drittes exemplarisches Kerngerüst 66 mit Tauchkörper 62. Das Kerngerüst ist in dieser Ansicht mit drei vorgesehenen Verbindungspositionen für Brennelemente dargestellt, welche jeweils zwei Brennelemente-Zentrierstifte 72 mit kegelähnlichen Enden 70 aufweisen. Der Tauchkörper 62 weist in seinem oberen Bereich zwei V-förmige Führungsschienen 66 auf, deren V-Profilform auf die Form der Enden 70 angepasst ist, so dass ein gleitender Eingriff der Enden 70 in die Führungsschienen 66 gewährleistet ist. Um einen Vortrieb des Tauchkörpers 62 zu gewährleisten, ist eine zweiteilige Antriebsvorrichtung 64 vorgesehen, in diesem Fall zwei schwenkbare Propeller, welche auch eine Steuerung des Tauchkörpers außerhalb der Führung 48 ermöglichen.

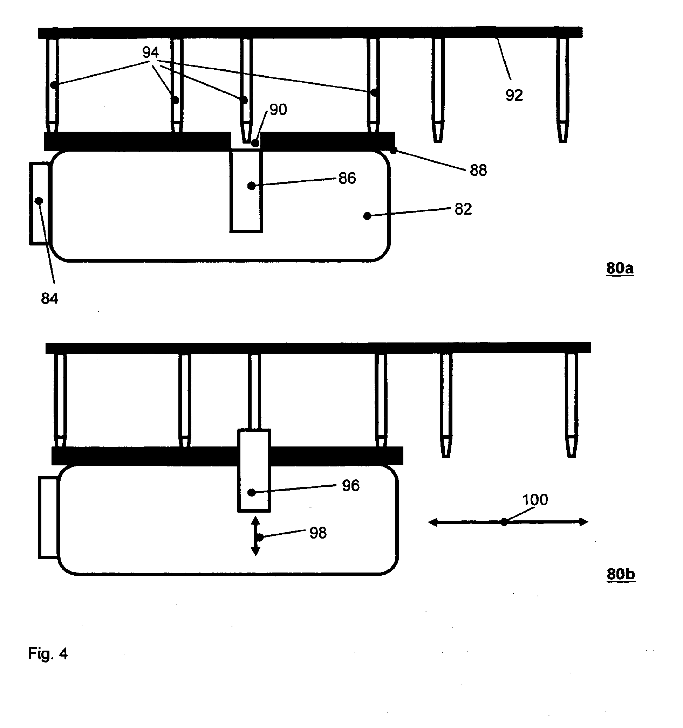

Fig. 4 zeigt eine Seitenansicht 80a und 80b auf ein viertes exemplarisches Kerngerüst 92 mit Tauchkörper 92. Der Tauchkörper 82 weist in seinem oberen Bereich zwei V-förmige Führungsschienen 88 auf, von denen jedoch nur eine sichtbar ist. Das Kerngerüst 92 ist in dieser Ansicht mit drei vorgesehenen Verbindungspositionen für Brennelemente dargestellt, welche jeweils zwei Brennelemente-Zentrierstifte mit kegelähnlichen Enden aufweisen, wobei in diesem Beispiel vier Brennelemente-Zentrierstifte 94 von den Führungsschienen 88 des Tauchkörpers 82 abgedeckt werden. Die Führungsschienen 88 weisen jeweils einen unterbrochenen Bereich 90 auf, welcher in der gezeigten Analyseposition des Tauchkörpers 82 genau über einer Analysevorrichtung befindlich ist. Die Analysevorrichtung umfasst beispielsweise Mittel für eine optische und/oder eine Ultraschallprüfung von wobei Brennelemente-Zentrierstiften und ist im oberen Bild 80a in einem eingefahrenen Zustand 86 und im unteren Bild in einem ausgefahrenen, einen Brennelemente-Zentrierstift teilweise umfassenden, Zustand 96 gezeigt. Die Bewegungsrichtung der Analysevorrichtung zwischen ihren beiden Positionen 86, 96 ist mit dem Pfeil 98 angedeutet. Eine Antriebsvorrichtung 84 ermöglicht einen Vorschub des Tauchkörpers 92, so dass er in Pfeilrichtung 100 bewegbar ist und so mehrere Analysepositionen direkt anfahren kann.

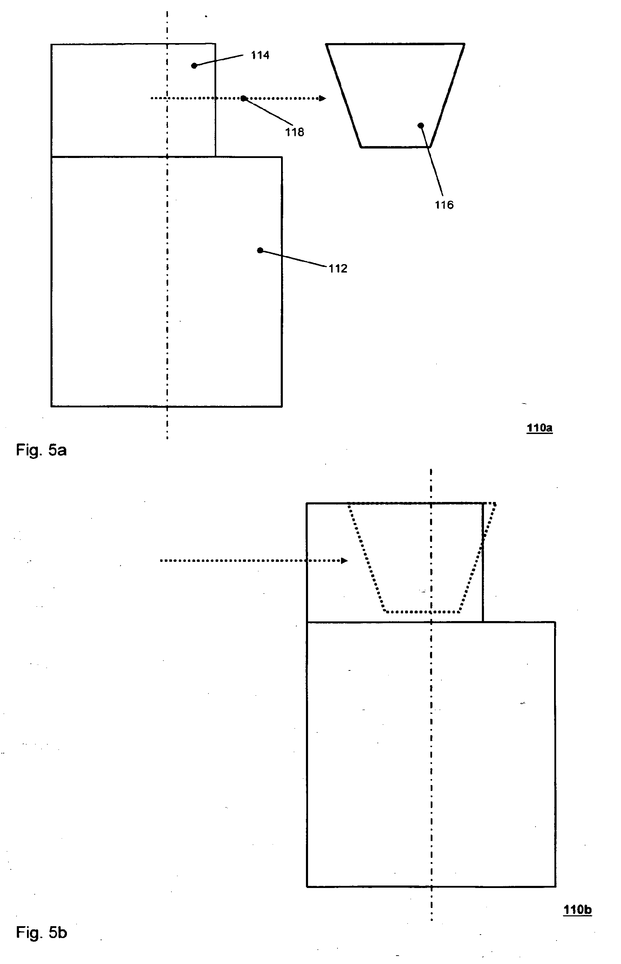

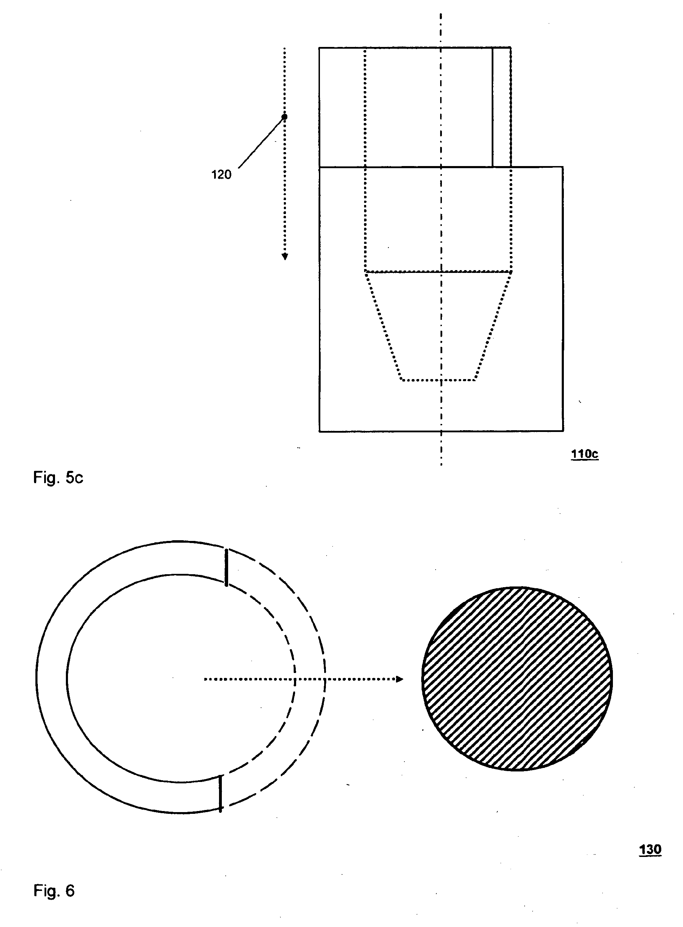

Fig. 5 zeigt einen beispielhaften Andockvorgang 110a, 100b, 110c eines Sensorteils 112, 114 einer nicht gezeigten Analysevorrichtung an einen Brennelement-Zentrierstift 116. Der Sensorteil 112, 114 ist hohlzylindrisch ausgeführt, wobei der obere Teil 114 U-förmig ausgebildet ist, also eine radiale Öffnung beziehungsweise Aussparung aufweist. Diese zeigt in Fahrtrichtung 118 des nicht gezeigten Tauchkörpers, mit dem diese zusammen längs der nicht gezeigten Führungsschienen in Richtung des Brennelemente-Zentrierstiftes bewegt wird. Wenn dieser erreicht ist, ist er durch die radiale Öffnung in den hohlzylindrischen Innenraum des Sensorteils gelangt, was einen Bewegungsstop des Tauchkörpers zur Folge hat, wie mit der Bezugsziffer 100b abgedeutet. Nun kann wie im Bild 100c angedeutet der Sensorteil in Richtung 120 des Brennelemente-Zentrierstiftes gefahren und die Analyse durchgeführt werden.

Fig. 6 zeigt eine entsprechende Schnittansicht auf den Sensorteil einer Analysevorrichtung und einen Brennelement-Zentrierstift in einer Draufsicht, wie sie in etwa dem Teilbild 100a der Fig. 5 entspricht.

### Bezugszeichenliste

- 10: Draufsicht auf erstes exemplarisches oberes Kerngerüst
- 12: Raster von Brennelementgrundfläche mit Stiftpaaren
- 14: Brennelement-Zentrierstift in zweitem Rastermaß
- 16: Brennelement-Zentrierstift in erstem Rastermaß
- 18: erstes Rastermaß
- 20: zweites Rastermaß
- 22: x-Komponente von Rastermaßversatz
- 24: y-Komponente von Rastermaßversatz
- 26: Rastermaßversatz
- 30: Draufsicht auf zweites exemplarisches Kerngerüst mit Tauchkörper
- 32: erster Tauchkörper
- 34: erste Führungsschiene
- 36: zweite Führungsschiene
- 38: unterbrochener Bereich von erster Führungsschiene
- 40: unterbrochener Bereich von zweiter Führungsschiene
- 42: erste parallele Reihe von Brennelement-Zentrierstiften
- 44: zweite parallele Reihe von Brennelement-Zentrierstiften
- 46: erste Antriebsvorrichtung
- 48: gleitende Führung des Tauchkörpers
- 50: Brennelemente-Zentrierstift
- 52: Brennelemente-Zentrierstift
- 60: Seitenansicht auf drittes exemplarisches Kerngerüst mit Tauchkörper
- 62: zweiter Tauchkörper
- 64: zweite Antriebsvorrichtung
- 66: parallele Führungsschienen
- 68: drittes Kerngerüst
- 70: Enden von Brennelement-Zentrierstiften
- 72: Brennelement-Zentrierstifte
- 80a, b: Seitenansicht auf viertes exemplarisches Kerngerüst mit Tauchkörper
- 82: dritter Tauchkörper
- 84: dritte Antriebsvorrichtung
- 86: Analysevorrichtung in eingefahrener Position
- 88: dritte Führungsschiene
- 90: unterbrochener Bereich von dritter Führungsschiene
- 92: viertes Kerngerüst
- 94: vier von Führungsschienen abgedeckte Brennelement-Zentrierstifte
- 96: Analysevorrichtung in ausgefahrener Position
- 98: Bewegungsrichtung der Analysevorrichtung
- 100: Bewegungsrichtung des Tauchkörpers
- 110a,b,c: beispielhafter Andockvorgang an Brennelement-Zentrierstift
- 112: erster hohlzylindrischer Teilbereich einer Analysevorrichtung
- 114: zweiter hohlzylindrischer Teilbereich einer Analysevorrichtung
- 116: Kegelförmiges Ende eines Brennelement-Zentrierstiftes
- 118: erster Bewegungszyklus
- 120: zweiter Bewegungszyklus
- 130: Schnittansicht auf Analysevorrichtung und Brennelement-Zentrierstift

## Patentansprüche

1. Prüfsystem für Brennelemente-Zentrierstifte (14, 16, 50, 52, 72, 94) an einem oberen Kerngerüst (10, 68, 92), umfassend
• ein oberes Kerngerüst (10, 68, 92) mit einer Vielzahl von gleichartigen, parallelen, senkrecht zu einer Gitterrasterebene in einem jeweiligen Rastermass (18, 20) angeordneten Brennelemente-Zentrierstiften (14, 16, 50, 52, 72, 94),
• ein Wasserbecken, in dem das obere Kerngerüst (10, 68, 92) derart anordenbar ist, dass die Brennelemente-Zentrierstifte (14, 16, 50, 52, 72, 94) in einem Abstand zum Beckenboden in etwa senkrecht nach unten ausgerichtet sind,
• einen unter Wasser einen Auftrieb erfahrenden Tauchkörper (32, 62, 82) mit wenigstens einer Antriebsvorrichtung (46, 64, 84),
• wenigstens zwei parallele mit dem Tauchkörper (32, 62, 82) verbundene Führungsschienen (34, 36, 66, 88), deren jeweiliges Querschnittsprofil (66) auf die Form der der Gitterrasterebene abgewandten Enden (70) der Brennelemente-Zentrierstifte (14, 16, 50, 52, 72, 94) angepasst ist, wobei bei einem Eingriff der Enden (70) in die jeweiligen Führungsschienen (34, 36, 66, 88) eine gleitende Führung (48, 100) des Tauchkörpers (32, 62, 82) längs paralleler Reihen (42, 44) von Brennelemente-Zentrierstiften (14, 16, 50, 52, 72, 94) ermöglicht ist,
• wobei der Tauchkörper (32, 62, 82) eine derartige Dichte aufweist, dass er unter Wasser einen Auftrieb erfährt, durch welchen er ohne weitere Maßnahmen mit seinen Schienen gegen die nach unten ragenden Brennelemente-Zentrierstifte gedrückt wird,
• wenigstens eine Analysevorrichtung (86, 96), welche mit dem Tauchkörper (32, 62, 82) in eine jeweilige Position unterhalb eines der Brennelemente-Zentrierstifte (14, 16, 50, 52, 72, 94) verbringbar ist, so dass dessen Überprüfung durch die Analysevorrichtung (86, 96) ermöglicht ist.

2. Prüfsystem nach Anspruch 1, **dadurch gekennzeichnet, dass** der Tauchkörper (32, 62, 82) wenigstens eine erste überwiegend parallel zu den Führungsschienen (34, 36, 66, 88) ausgerichtete, eine zweite quer dazu in überwiegend horizontaler Richtung wirkende und eine dritte ebenfalls quer dazu in überwiegend vertikaler Richtung wirkende Antriebsvorrichtung (46, 64, 84) aufweist.

3. Prüfsystem nach Anspruch 1 oder 2, **dadurch gekennzeichnet, dass** wenigstens eine Führungsschiene (34, 36, 66, 88) zwischen ihren beiden Enden einen unterbrochenen Bereich (38, 40, 90) aufweist, wobei hinter diesem die darauf (38, 40, 90) gerichtete Analysevorrichtung (86, 96) angeordnet ist.

4. Prüfsystem nach einem der vorangegangenen Ansprüche, **dadurch gekennzeichnet, dass** die Brennelemente-Zentrierstife (14, 16, 50, 52, 72, 94) paarweise (12) in zueinander um eine Komponente in x- und y-Richtung versetzten Rastermaßen (18, 20) angeordnet sind und dass der Abstand der Führungsschienen (34, 36, 66, 88) auf die x- Komponente des Rastermassversatzes (22, 24) eines Paares abgestimmt ist.

5. Prüfsystem nach Anspruch 4, **dadurch gekennzeichnet, dass** die Führungsschienen (34, 36, 66, 88) unter Berücksichtigung der y- Komponente des Rastermassversatzes (22, 24) wenigstens so lang sind, dass beide Führungsschienen (34, 36, 66, 88) insgesamt stets wenigstens fünf Brennelemente-Zentrierstifte abdecken (94) und dass beide Führungsschienen (34, 36, 66, 88) einen unterbrochenen Bereich (38, 40, 90) aufweisen, und dass die unterbrochenen Bereiche (38,40,90) entsprechend der y- Komponente des Rastermassversatzes (22, 24) versetzt sind.

6. Prüfvorrichtung nach Anspruch 3 bis 5, **dadurch gekennzeichnet, dass** zumindest ein Messaufnehmer oder sonstige aktive und/oder passive Sensoren der Analysevorrichtung (86, 96) durch den unterbrochenen Bereich (38, 40, 90) heraus bewegbar (98) sind.

7. Prüfvorrichtung nach Anspruch 6, **dadurch gekennzeichnet, dass** der herausbewegbare Teil der Analysevorrichtung in seinem oberen Teil hohlzylindrisch ist, so dass ein Brennelemente-Zentrierstift umfasst werden kann und dass im oberen Bereich des oberen Teils eine radiale Aussparung vorgesehen ist.

8. Prüfsystem nach einem der vorherigen Ansprüche, **dadurch gekennzeichnet, dass** die wenigstens eine Analysevorrichtung (86, 96) Mittel für eine Ultraschallprüfung umfasst.

9. Prüfsystem nach einem der vorherigen Ansprüche, **dadurch gekennzeichnet, dass** der Tauchkörper (32, 62, 82) wenigsten einen Orientierungssensor aufweist.

10. Prüfsystem nach Anspruch 9, **dadurch gekennzeichnet, dass** das Kerngerüst (10, 68, 92) Orientierungsmarken aufweist, welche von dem Orientierungssensor erkennbar sind, so dass daraus eine jeweilige Position des Tauchkörpers (32, 62, 82) zum Kerngerüst (10, 68, 92) ermittelbar ist.

11. Prüfsystem nach Anspruch 9, **dadurch gekennzeichnet, dass** der Wasserbeckenboden und/oder die Wasserbeckenwandung Orientierungsmarken aufweist, welche von dem Orientierungssensor erkennbar sind, so dass daraus eine jeweilige Position des Tauchkörpers (32, 62, 82) zum Wasserbecken ermittelbar ist.

12. Prüfsystem nach einem der vorherigen Ansprüche, **dadurch gekennzeichnet, dass** die Antriebsvorrichtung (46, 64, 84) wenigstens einen Propellerantrieb umfasst.

13. Prüfsystem nach einem der vorherigen Ansprüche, **dadurch gekennzeichnet, dass** im Wasserbecken Abstandshalter vorgesehen sind, durch welche ein so großer Abstand eines im Wasserbecken abgestellten oberen Kerngerüstes (10, 68, 92) zum Beckenboden gewährleistet ist, dass der Tauchkörper (32, 62, 82) unterhalb des Kerngerüstes (10, 68, 92) frei bewegbar ist.

14. Prüfsystem nach einem der vorherigen Ansprüche, **dadurch gekennzeichnet, dass** dieses einen Kran oder eine Hebevorrichtung umfasst, wodurch das obere Kerngerüst (10, 68, 92) im Wasserbecken anordenbar ist.

15. Verfahren zur Prüfung von Brennelemente-Zentrierstiften (14, 16, 50, 52, 72, 94) an einem oberen Kerngerüst (10, 68, 92) mittels eines Prüfsystems nach einem der Ansprüche 1 bis 14, **gekennzeichnet durch** folgende Schritte:
• Anordnung des oberen Kerngerüstes (10, 68, 92) im Wasserbecken,
• Positionierung des Tauchkörpers (32, 62, 82) unterhalb des oberen Kerngerüstes (10, 68, 92), so dass eine gleitende Führung des Tauchkörpers (32, 62, 82) längs paralleler Reihen (42, 44) von Brennelemente-Zentrierstiften (14, 16, 50, 52, 72, 94) ermöglicht ist,
• sequentielles Anfahren jeweiliger Prüfpositionen für längs der parallelen Reihen (42, 44) befindliche Brennelemente-Zentrierstifte (14, 16, 50, 52, 72, 94),
• Prüfen der Brennelemente-Zentrierstifte (14, 16, 50, 52, 72, 94) in der jeweiligen Prüfposition mittels der Analysevorrichtung (86, 96).

## Claims

1. Test system for fuel-element locating pins (14, 16, 50, 52, 72, 94) on an upper core structure (10, 68, 92), comprising
• an upper core structure (10, 68, 92) with a multiplicity of identical parallel fuel-element locating pins (14, 16, 50, 52, 72, 94) arranged perpendicularly to a grid plane according to a respective grid dimension (18, 20),
• a water basin, in which the upper core structure (10, 68, 92) can be arranged in such a way that the fuel-element locating pins (14, 16, 50, 52, 72, 94) are oriented approximately vertically downwards at a distance from the basin bottom,
• an immersion body (32, 62, 82) experiencing buoyancy under water and having at least one drive device (46, 64, 84),
• at least two parallel guide rails (34, 36, 66, 88) which are connected to the immersion body (32, 62, 82) and the respective cross-sectional profile (66) of which is adapted to the shape of those ends (70) of the fuel-element locating pins (14, 16, 50, 52, 72, 94) which face away from the grid plane, engagement of the ends (70) into the respective guide rails (34, 36, 66, 88) allowing sliding guidance (48, 100) of the immersion body (32, 62, 82) along parallel rows (42, 44) of fuel-element locating pins (14, 16, 50, 52, 72, 94),
• the immersion body (32, 62, 82) having a density such that under water it experiences buoyancy, by means of which, without further measures, it is pressed with its rails against the downwardly projecting fuel-element locating pins,
• at least one analysis device (86, 96), which can be brought by means of the immersion body (32, 62, 82) into a respective position underneath one of the fuel-element locating pins (14, 16, 50, 52, 72, 94), so that it becomes possible to check the latter by means of the analysis device (86, 96).

2. Test system according to Claim 1, **characterized in that** the immersion body (32, 62, 82) has at least one first drive device (46) oriented predominantly parallel to the guide rails (34, 36, 66, 88), one second drive device (64) acting transversely thereto in the predominantly horizontal direction and one third drive device (84) likewise acting transversely thereto in the predominantly vertical direction.

3. Test system according to Claim 1 or 2, **characterized in that** at least one guide rail (34, 36, 66, 88) has between its two ends an interrupted region (38, 40, 90), the analysis device (86, 96) directed on the latter (38, 40, 90) being arranged behind this.

4. Test system according to one of the preceding claims, **characterized in that** the fuel-element locating pins (14, 16, 50, 52, 72, 94) are arranged in pairs (12) according to grid dimensions (18, 20) offset to one another by the amount of a component in the x-direction and y-direction, and **in that** the spacing of the guide rails (34, 36, 66, 88) is coordinated with the x-component of the grid dimension offset (22, 24) of a pair.

5. Test system according to Claim 4, **characterized in that**, taking into account the y-component of the grid dimension offset (22, 24), the guide rails (34, 36, 66, 88) are at least of a length such that the two guide rails (34, 36, 66, 88) overall always cover at least five fuel-element locating pins (94), and **in that** the two guide rails (34, 36, 66, 88) have an interrupted region (38, 40, 90), and **in that** the interrupted regions (38, 40, 90) are correspondingly offset to the y-component of the grid dimension offset (22, 24).

6. Test device according to Claims 3 to 5, **characterized in that** at least one measurement transducer or other active and/or passive sensors of the analysis device (86, 96) can be moved (98) out through the interrupted region (38, 40, 90).

7. Test device according to Claim 6, **characterized in that** the movable-out part of the analysis device is hollow-cylindrical in its upper part, so that a fuel-element locating pin can be surrounded, and **in that** a radial clearance is provided in the upper region of the upper part.

8. Test system according to one of the preceding claims, **characterized in that** the at least one analysis device (86, 96) comprises means for ultrasonic testing.

9. Test system according to one of the preceding claims, **characterized in that** the immersion body (32, 62, 82) has at least one orientation sensor.

10. Test system according to Claim 9, **characterized in that** the core structure (10, 68, 92) has orientation marks which can be detected by the orientation sensor, so that a respective position of the immersion body (32, 62, 82) with respect to the core structure (10, 68, 92) can be determined from this.

11. Test system according to Claim 9, **characterized in that** the water basin bottom and/or the water basin wall have/has orientation marks which can be detected by the orientation sensor, so that a respective position of the immersion body (32, 62, 82) with respect to the water basin can be determined from this.

12. Test system according to one of the preceding claims, **characterized in that** the drive device (46, 64, 84) comprises at least one propeller drive.

13. Test system according to one of the preceding claims, **characterized in that**, in the water basin spacers are provided, by means of which such a great distance of an upper core structure (10, 68, 92) set down in the water basin from the basin bottom is ensured that the immersion body (32, 62, 82) is freely movable underneath the core structure (10, 68, 92).

14. Test system according to one of the preceding claims, **characterized in that** this comprises a crane or a lifting device, with the result that the upper core structure (10, 68, 92) can be arranged in the water basin.

15. Method for the testing of fuel-element locating pins (14, 16, 50, 52, 72, 94) on an upper core structure (10, 68, 92) by means of a test system according to one of Claims 1 to 14, **characterized by** the following steps:
• arrangement of the upper core structure (10, 68, 92) in the water basin,
• positioning of the immersion body (32, 62, 82) underneath the upper core structure (10, 68, 92), so that sliding guidance of the immersion body (32, 62, 82) along parallel rows (42, 44) of fuel-element locating pins (14, 16, 50, 52, 72, 94) becomes possible,
• sequential advance to respective test positions for fuel-element locating pins (14, 16, 50, 52, 72, 94) arranged along the parallel rows (42, 44),
• testing of the fuel-element locating pins (14, 16, 50, 52, 72, 94) in the respective test position by means of the analysis device (86, 96).

## Revendications

1. Système de vérification de tiges de centrage (14, 16, 50, 52, 72, 94) d'éléments combustibles prévues sur un bâti nucléaire supérieur (10, 68, 92), comportant :
un bâti nucléaire supérieur (10, 68, 92) doté de plusieurs tiges de centrage (14, 16, 50, 52, 72, 94) d'éléments combustibles, identiques, parallèles et disposées perpendiculairement à un plan de grille à un pas (18, 20) respectif,
un bassin d'eau dans lequel le bâti nucléaire supérieur (10, 68, 92) peut être disposé de telle sorte que les tiges (14, 16, 50, 52, 72, 94) de centrage d'éléments combustibles soient orientées sensiblement à la verticale vers le bas, à distance du fond du bassin,
un corps d'immersion (32, 62, 82) qui subit une poussée vers le haut dans l'eau et qui présente au moins un dispositif d'entraînement (46, 64, 84),
au moins deux rails de guidage (34, 36, 66, 88) parallèles et reliés au corps d'immersion (32, 62, 82), dont le profil (66) de la section transversale est adapté à la forme des extrémités (70) des tiges (14, 16, 50, 52, 72, 94) de centrage d'éléments combustibles non tournées vers le plan de grille, un guidage coulissant (48, 100) du corps d'immersion (32, 62, 82) pouvant être réalisé le long de rangées parallèles (42, 44) de tiges (14, 16, 50, 52, 72, 94) de centrage d'éléments combustibles lorsque les extrémités (70) s'engagent dans les rails de guidage (34, 36, 66, 88) respectifs,
le corps d'immersion (32, 62, 82) présentant une densité telle que sous eau, il subisse une poussée vers le haut par laquelle il est repoussé sans autre disposition et par ses rails contre les tiges de centrage d'éléments combustibles débordant vers le bas,
au moins un dispositif d'analyse (86, 96) qui peut être amené avec le corps d'immersion (32, 62, 82) dans une position située en dessous d'une des tiges (14, 16, 50, 52, 72, 94) de centrage d'éléments combustibles de telle sorte que le dispositif d'analyse (86, 96) puisse le vérifier.

2. Système de vérification selon la revendication 1, **caractérisé en ce que** le corps d'immersion (32, 62, 82) présente au moins un premier dispositif d'entraînement (46, 64, 84), orienté essentiellement en parallèle aux rails de guidage (34, 36, 66, 88), un deuxième dispositif d'entraînement agissant transversalement par rapport au premier et principalement dans une direction horizontale et un troisième dispositif d'entraînement agissant également transversalement par rapport au précédent, principalement dans la direction verticale.

3. Système de vérification selon les revendications 1 ou 2, **caractérisé en ce qu'**au moins un rail de guidage (34, 36, 66, 88) présente entre ses deux extrémités une partie interrompue (38, 40, 90), le dispositif d'analyse (86, 96) orienté vers cette partie (38, 40, 90) étant disposé derrière cette partie.

4. Système de vérification selon l'une des revendications précédentes, **caractérisé en ce que** les tiges (14, 16, 50, 52, 72, 94) de centrage d'éléments combustibles sont disposées par paires (12) en décalage mutuel d'une composante dans la direction x et dans la direction y et **en ce que** la distance entre les rails de guidage (34, 36, 66, 88) est accordée sur la composante x du décalage de pas d'une paire.

5. Système de vérification selon la revendication 4, **caractérisé en ce que** compte tenu de la composante y du décalage (22, 24) du pas, les rails de guidage (34, 36, 66, 88) ont une longueur au moins suffisante pour que deux rails de guidage (34, 36, 66, 88) couvrent ensemble et toujours au moins cinq tiges de centrage d'éléments combustibles, **en ce que** les deux rails de guidage (34, 36, 66, 88) présentent une partie interrompue (38, 40, 90) et **en ce que** les parties interrompues (38, 40, 90) sont décalées en correspondance du décalage de pas (22, 24).

6. Système de vérification selon l'une des revendications 3 à 5, **caractérisé en ce qu'**au moins un enregistreur de mesure ou d'autres capteurs actifs et/ou passifs du dispositif d'analyse (86, 96) peuvent être déplacés hors de la partie interrompue (38, 40, 90).

7. Système de vérification selon la revendication 6, **caractérisé en ce que** la partie extractible du dispositif d'analyse est cylindrique creuse dans sa partie supérieure de telle sorte qu'une tige de centrage d'éléments combustibles puisse être saisie et **en ce qu'**une découpe radiale est prévue au niveau supérieur de la partie supérieure.

8. Système de vérification selon l'une des revendications précédentes, **caractérisé en ce que** le ou les dispositifs d'analyse (86, 96) comprennent des moyens de vérification par ultrasons.

9. Système de vérification selon l'une des revendications précédentes, **caractérisé en ce que** le corps d'immersion (32, 62, 82) présente au moins un capteur d'orientation.

10. Système de vérification selon la revendication 9, **caractérisé en ce que** le bâti nucléaire (10, 68, 92) présente des repères d'orientation qui peuvent être détectés par le capteur d'orientation de manière à pouvoir déterminer à partir de là la position de chaque corps d'immersion (32, 62, 82) par rapport au bâti nucléaire (10, 68, 92).

11. Système de vérification selon la revendication 9, **caractérisé en ce que** le fond du bassin d'eau et/ou la paroi du bassin d'eau présentent des repères d'orientation qui peuvent être détectés par les capteurs d'orientation de telle sorte qu'à partir de là la position de chaque corps d'immersion (32, 62, 82) par rapport au bassin d'eau puisse être déterminée.

12. Système de vérification selon l'une des revendications précédentes, **caractérisé en ce que** le dispositif d'entraînement (46, 64, 84) comporte au moins un entraînement à hélice.

13. Système de vérification selon l'une des revendications précédentes, **caractérisé en ce que** des écarteurs par lesquels une distance entre un bâti nucléaire (10, 68, 92) supérieur posé dans le bassin d'eau et le fond du bassin telle que le corps d'immersion (32, 62, 82) puisse être déplacé librement en dessous du bâti nucléaire (10, 68, 92) sont prévus dans le bassin d'eau.

14. Système de vérification selon l'une des revendications précédentes, **caractérisé en ce qu'**il comporte une grille ou un dispositif de levage qui permet de placer le bâti nucléaire supérieur (10, 68, 92) dans le bassin d'eau.

15. Procédé de vérification de tiges (14, 16, 50,52, 72, 94) de centrage d'éléments combustibles prévues sur un bâti nucléaire supérieur (10, 68, 92), au moyen d'un système de vérification selon l'une des revendications 1 à 14, **caractérisé par** les étapes suivantes :
placement du bâti nucléaire supérieur (10, 68, 92) dans le bassin d'eau,
positionnement du corps d'immersion (32, 62, 82) en dessous du bâti nucléaire supérieur (10, 68, 92) de manière à permettre un guidage coulissant du corps d'immersion (32, 62, 82) le long de rangées parallèles (42, 44) de tiges (14, 16, 50, 52, 72, 94) des centrages d'éléments combustibles,
avancement successif vers des positions respectives de vérification de tiges (14, 16, 50, 52, 72, 94) de centrage d'éléments combustibles situés le long des rangées parallèles (42, 44) et
vérification des tiges (14, 16, 50, 52, 72, 94) de centrage d'éléments combustibles dans chaque position de vérification au moyen du dispositif d'analyse (86, 96).
